# EUROPEAN PATENT SPECIFICATION

(11) **EP 1 972 510 B1**
(45) Date of publication and mention of the grant of the patent: **03.11.2010**
(21) Application number: 08004172.6
(22) Date of filing: 06.03.2008
(51) Int. Cl.: B60R 22/48

(54) **Seat belt retractor, seat belt apparatus, and seat belt winding method**
Sicherheitsgurtauftroller, Sicherheitsgurtvorrichtung und Methode zum Wickeln eines Sicherheitsgurts
Rétracteur de ceinture de sécurité, appareil de ceinture de sécurité, et procédé d'enroulement de ceinture de sécurité

(30) Priority: 23.03.2007 JP 2007076969
(43) Date of publication of application: 24.09.2008
(73) Proprietor: TAKATA CORPORATION, Minato-ku, Tokyo 106-8510 (JP)
(72) Inventor: Takao, Masato, Tokyo 106-8510 (JP); Tanaka, Koji, Tokyo 106-8510 (JP); Murakami, Daisuke, Tokyo 106-8510 (JP)
(74) Representative: Banzer, Hans-Jörg

(56) References cited:
- EP-A- 1 818 225
- JP-A- 2005 280 497

## Description

### Technical Field of the Invention

The present invention relates to a technology of seat belt winding. Particularly, the present invention relates to a seat belt retractor for winding up a seat belt by means of a motor and a seat belt apparatus with the seat belt retractor, and to a method of winding up a seat belt by means of a motor.

### Related Art

A vehicle such as an automobile is provided with a seat belt apparatus for restraining an occupant in a seat. The seat belt apparatus comprises a seat belt (sometimes called webbing), a buckle, a tongue plate, a retractor, and the like.

Among these components, the retractor is a device for winding up the seat belt. The retractor comprises not only a winding mechanism using spring force but also a pretensioner which moves a piston by explosion of powder or the like to strongly pull the belt in the event of an emergency such as a vehicle collision, thereby restraining the occupant in the seat. Recently, there is a motorized retractor which comprises a motor so as to wind up the seat belt by the motor.

For reducing the electric power consumption, the motorized retractor is adapted such that electric power is supplied to the motor when winding up the seat belt and the supply of the electric power to the motor is stopped and the motor is turned off after completion of winding-up of the seat belt. However, for example, when the seat belt is caught by something such as an arm of the occupant even during the winding-up of the seat belt or when the occupant starts the withdrawal of the seat belt during the winding-up of the seat belt, the motor should be stopped and then suitably controlled.

There is a motorized retractor which is adapted to handle such a case (for example, see JP-A-2005-280497which discloses a seat belt retractor according to the preamble of claims 1 and 2 and a seat belt winding method according to the preamble of claims 4 and 5). The motorized retractor disclosed in JP-A-2005-280497 has such a function that the motorized retractor is set to a standby state where the winding-up is stopped for a predetermined time period when an overload is detected during the winding-up of the seat belt and restarts the winding-up of the seat belt after a lapse of the predetermined time period. Because of the function, the motorized retractor can suitably handle the case where the seat belt is caught and the case where the withdrawal of the seat belt is started by the occupant during the winding-up.

### Disclosure of the Invention

### Problems to be solved by the Invention

Normally, at the completion of the winding-up of the seat belt, an overload is detected similar to the case where the seat belt is caught by something. Since the aforementioned invention of JP-A-2005-280497 repeatedly conducts the winding-up action a predetermined number of times for such a case, the seat belt retractor has a disadvantage that the motor may be unnecessarily driven to conduct the winding-up action even when the winding-up is already completed.

The present invention was made in view of the aforementioned conditions and an object of the present invention is to provide a seat belt retractor which can precisely detect a state that the winding-up is impossible such as when the winding-up is completed or when it is impossible to release the catching of the seat belt during the winding up of the seat belt and thus enables an efficient winding-up of the seat belt, to provide a seat belt apparatus comprising the seat belt retractor, and to provide a method of winding up a seat belt.

### Means to solve the Problems

According to the invention, this object is achieved by a seat belt retractor as defined in claim 1 or claim 2, a seat belt apparatus as defined in claim 3, and a seat belt winding method as defined in claim 4 or claim 5.

A seat belt retractor according to a first aspect of the present invention comprises: a seat belt winding means for winding up a seat belt by means of actuation of a motor; and a control means which repeats, under a predetermined condition, a process of stopping the actuation of said motor when an overload of said motor is detected, and restarting the actuation of said motor after a lapse of a predetermined time period, wherein said control means comprises: a motor actuation timing means for clocking the time period from the start to the stop of the actuation of said motor; a motor actuation counting means for counting up the number of times of starting the actuation of the motor; and a retry determining means which determines, based on the result of the clocking by said motor actuation timing means and the result of the counting by said motor actuation counting means, whether or not it is required to restart the actuation of said motor which was stopped by the detection of said overload.

In the seat belt retractor as mentioned above, said retry determining means may determine that it is not required to restart the actuation of said motor when a time period as the result of the clocking by said motor actuation timing means is shorter than a predetermined time period a plurality of times in a row or sequence.

Said retry determining means may determine that it is not required to restart the actuation of said motor when the actuation of said motor which was restarted is stopped by the detection of said overload and a time period as the result of the clocking by said motor actuation timing means is shorter than a predetermined time period.

A seat belt apparatus according to the second aspect of the present invention comprises: a seat belt; a tongue plate which is slidably attached to said seat belt; a buckle to which said tongue plate is inserted and latched; and a seat belt retractor according to the first aspect of the present invention.

A seat belt winding method according to the third aspect of the present invention is a method for repeating, under a predetermined condition, a process of stopping the actuation of a motor, which provides power for winding up a seat belt, when an overload of said motor is detected during the actuation of said motor, and restarting the actuation of said motor after a lapse of a predetermined time period, wherein said method comprises: a motor actuation timing step for clocking the time period from the start to the stop of the actuation of said motor; a motor actuation counting step for counting up the number of times of starting the actuation of the motor; and a retry determining step for determining, based on the result obtained in said motor actuation timing step and the result obtained in said motor actuation counting step, whether or not it is required to restart the actuation of said motor which was stopped by the detection of said overload.

In said retry determining step of the seat belt winding method as mentioned above, it may be determined that it is not required to restart the actuation of said motor when a time period as the result obtained in said motor actuation timing step is shorter than a predetermined time period a plurality of times in a row.

In said retry determining step of the seat belt winding method as mentioned above, it may be determined that it is not required to restart the actuation of said motor when the actuation of said motor which was restarted is stopped by the detection of said overload and a time period as the result obtained in said motor actuation timing means is shorter than a predetermined time period.

### Effects of the Invention

As mentioned above, according to the present invention, the state where it is impossible to wind up the seat belt, for example when the winding-up of the seat belt is completed or when it is impossible to release the catching of the seat belt, can be precisely detected, thereby enabling efficient winding-up action of the seat belt.

### Brief Explanation of the drawings

Fig. 1 is an illustration schematically showing an arrangement of a seat belt apparatus comprising a seat belt retractor according to a first embodiment of the present invention.
Fig. 2 is an illustration schematically showing an arrangement of the seat belt retractor according to the first embodiment of the present invention.
Fig. 3 is a block diagram showing an arrangement of a controller and a connection thereof.
Fig. 4 is a block diagram showing an arrangement of a retry control unit of a control unit shown in Fig. 3.
Fig. 5 is a flow chart showing procedures of the seat belt winding-up process according to the first embodiment of the present invention.
Fig. 6 is a flow chart showing procedures of the retry judgment according to the first embodiment of the present invention.
Fig. 7 is a flow chart showing procedures of the retry judgment according to a second embodiment of the present invention.

### Best Modes for carrying out the Invention

Hereinafter, embodiments of a seat belt retractor according to the present invention will be described with reference to attached drawings.

### First embodiment

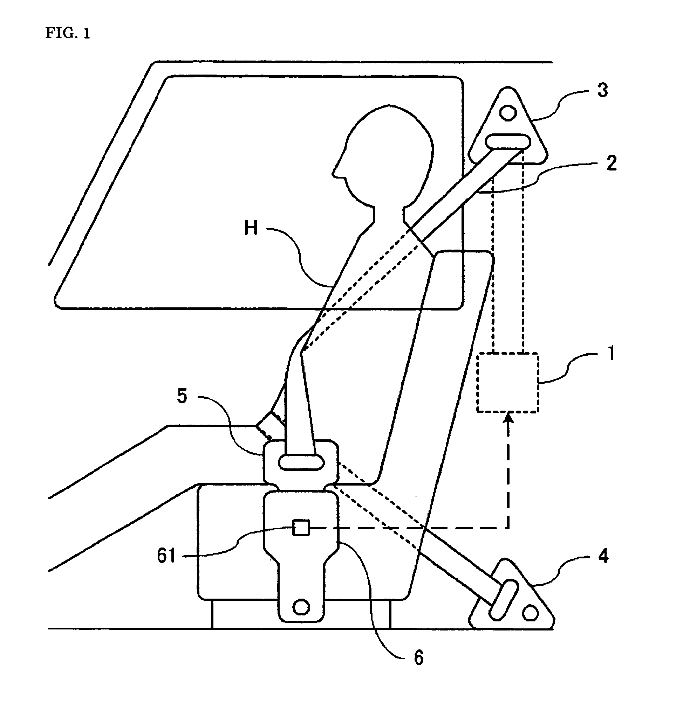

Fig. 1 is an illustration schematically showing an arrangement of a seat belt apparatus comprising a seat belt retractor according to a first embodiment of the present invention. The seat belt apparatus is attached to a vehicle seat and comprises, as shown in this drawing, a seat belt retractor 1, a seat belt 2, a deflection fitting 3, a belt anchor 4, a tongue plate 5, and a buckle 6.

The seat belt retractor 1 is a device of winding up the seat belt 2 by means of power of a motor and is fixed to an interior part of a side wall of a vehicle body. One end of the seat belt 2 is attached to the seat belt retractor 1 and the other end of the seat belt 2 passes through the deflection fitting 3 which is disposed around an upper portion of a center pillar and is attached to the belt anchor 4 which is fixed in the vicinity of the seat belt retractor 1.

The tongue plate 5 is supported by the seat belt 2 such that the tongue plate 5 is slidable in a predetermined range from a turn at the deflection fitting 3 to the belt anchor 4. The buckle 6 is fixed to the seat (or a floor of the vehicle body) and has a structure to which the tongue plate 5 is inserted and latched. The buckle 6 comprises a seat belt wearing sensor 61 which detects the latching of the tongue plate 5 so as to detect the wearing or cancellation of the wearing of the seat belt 2. The seat belt wearing sensor 61 outputs a detected signal to the seat belt retractor 1 via a wire.

When getting on the vehicle, an occupant H sits down on the seat, then withdraws the seat belt 2 from the seat belt retractor 1 and inserts the tongue plate 5 into the buckle 6 to latch the buckle 6 with the tongue plate 5. Accordingly, the seat belt 2 is worn by the occupant H so that the upper part and lap part of the occupant H are restrained relative to the seat. As the seat belt wearing sensor 61 detects the latching of the tongue plate 5, the seat belt wearing sensor 61 outputs a signal indicating the wearing (hereinafter, referred to as "wearing signal") to the seat belt retractor 1.

On the other hand, when getting off the vehicle, the occupant H releases the tongue plate 5 from the buckle 6. Then, the seat belt wearing sensor 61 outputs a signal indicating the cancellation of the wearing (hereinafter, referred to as "cancellation signal") to the seat belt retractor 1. As the seat belt retractor 1 receives this cancellation signal, the seat belt retractor 1 actuates the motor so as to start the action of winding up the seat belt 2.

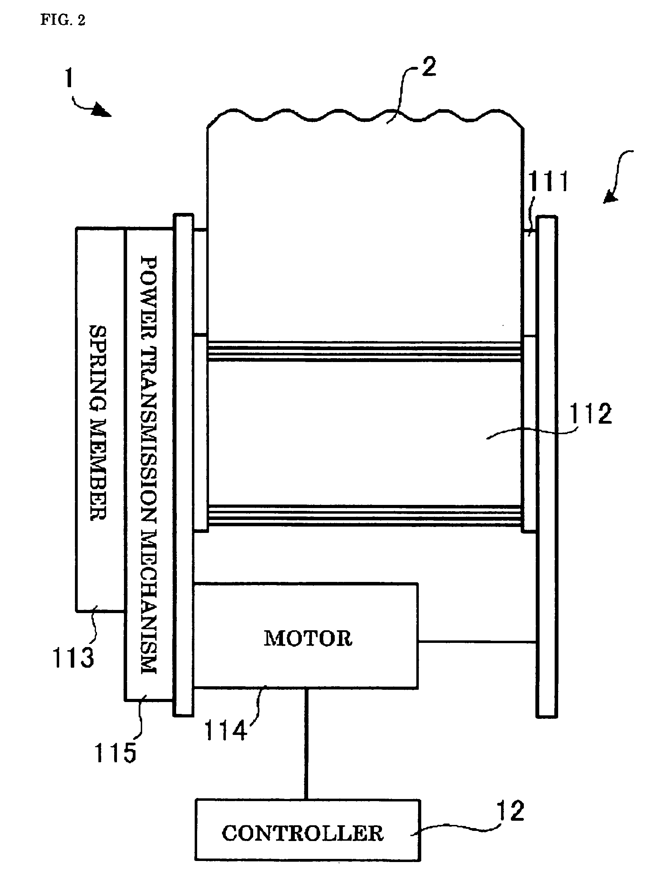

Fig. 2 is an illustration schematically showing the structure of the seat belt retractor 1. As shown in Fig. 2, the seat belt retractor 1 comprises a winding unit 11, which includes a frame 111, a spool 112, a spring member 113, a motor 114, and a power transmission mechanism 115, and a controller 12.

The spool 112 is rotatably supported by the frame 111 having a U-like shape. Attached to the outer surface of the spool 112 is an end of the seat belt 2. The spool 112 is rotated by the driving force of the motor 114, whereby the seat belt 2 is wound up by the seat belt retractor 1.

The spring member 113 always biases the spool 112 in the winding direction by means of spring force. The spring member 113 is supported by the frame 111 and is connected to the spool 112 via the power transmission mechanism 115.

The motor 114 is an electric motor for rotating the spool 112 and is supported by the frame 111. The power transmission mechanism 115 supported by the frame 111, similarly to the motor 114, is arranged between the motor 114 and the spool 112 to transmit the power of the motor 114 to the spool 112 with varying the speed (particularly, reducing the speed). Especially, the power transmission mechanism 115 comprises a spool-side pulley which is fixed to the rotary shaft of the spool 112, a motor-side pulley which is fixed to the rotary shaft of the motor 114, and a timing belt which is laid to extend between these pulleys with some tension (all of them are not shown). The power transmission mechanism 115 also has a clutch function so as to cancel the connection between the motor 114 and the spool 112 when the motor 114 is not actuated for the purpose of allowing the withdrawal of the seat belt 2 from the spool 112.

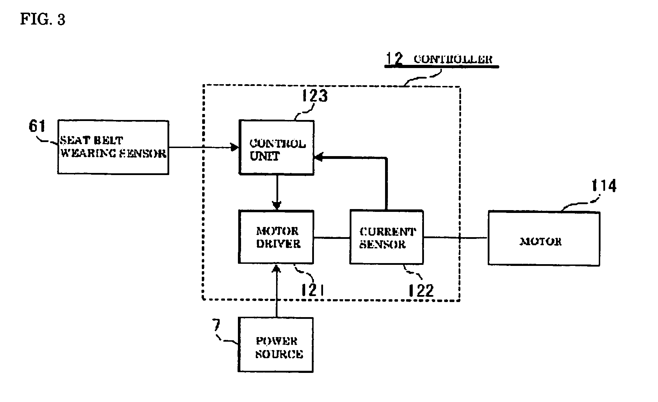

The controller 12 controls the actuation of the motor 114 and comprises, as shown in Fig. 3, a motor driver 121, a current sensor 122, and a control unit 123. The controller 12 is connected to the motor 114, a power source 7 for supplying the power for the motor 114, and the seat belt wearing sensor 61 via wires.

The motor driver 121 is connected to the power source 7 so that power supply voltage from the power source 7 is applied to the motor driver 121. The power source 7 may be a battery equipped on the vehicle. The motor driver 121 applies voltage to the motor 114 to actuate the motor 114 according to the control by the control unit 123.

The current sensor 122 is disposed between the motor driver 121 and the motor 114 to detect a value of current flowing through the motor 114. The current sensor 122 outputs a detected current value to the control unit 123.

The control unit 123 comprises a CPU (Central Processing Unit) which carries out a control program, a ROM (Read Only Memory) which stores the control program, a control parameter table, and the like, and a RAM (Random Access Memory) which is used as a work area when the control program is carried out.

The control unit 123 controls the motor driver 121 according to control parameters for controlling the motor 114 (from the control parameter table), thereby controlling the motor 114 via the motor driver 121. Specifically, the control unit 123 controls the rotation of the motor 114 in the form of PWM (Pulse Width Modulation). Therefore, the control unit 123 generates a PWM signal of a predetermined duty ratio and outputs the generated PWM signal and a control signal indicating the rotational direction of the motor 114 to the motor driver 121. The motor driver 121 applies driving voltage, obtained by adjusting the power supply voltage according to the PWM signal, to the motor 114. Accordingly, the motor 114 rotates at a speed according to the predetermined duty ratio so that the seat belt 2 is wound up onto the spool 112.

The seat belt retractor 1 having the aforementioned structure has a function (hereinafter, referred to as "retry function") for restarting the winding up of the seat belt 2 such that the winding-up of the seat belt 2 is stopped, for example, when the seat belt 2 is caught by the body of the occupant H, the seat, or a door during the action of winding up the seat belt 2 (during the seat belt winding process) and is restarted after a lapse of a predetermined time period from the stopping. The seat belt retractor 1 has excellent features in the retry function. Hereinafter the features will be described in detail.

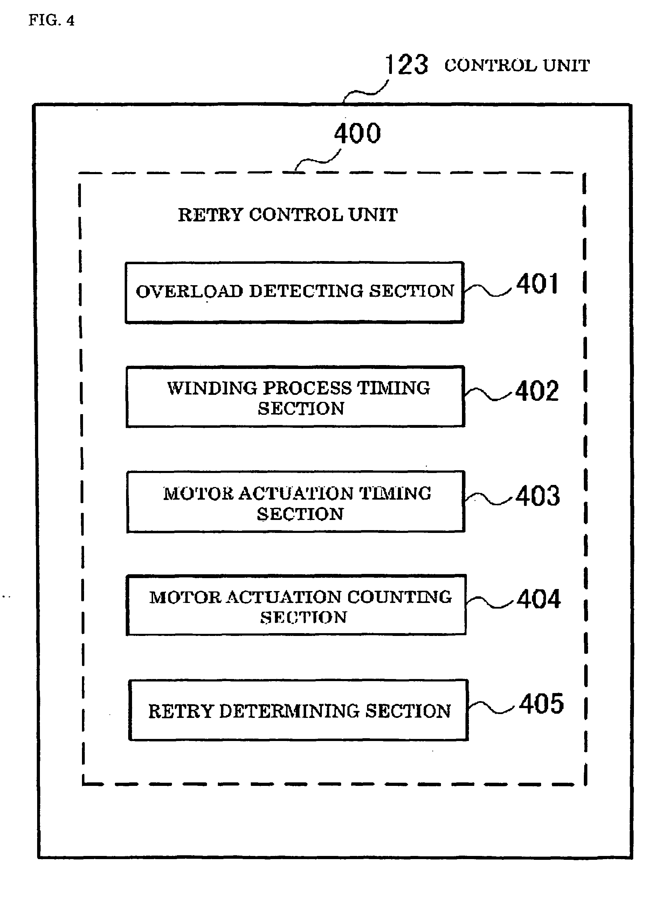

The control unit 123 comprises a retry control unit 400 for controlling the retry function. The retry control unit comprises, as shown in Fig. 4, an overload detecting section 401, a winding process timing section 402, a motor actuation timing section 403, a motor actuation counting section 404, and a retry determining section 405.

The overload detecting section 401 detects an overload applied to the motor 114 caused by the completion of winding-up, the catching of the seat belt by the body of the occupant H, the seat, or the door, or the start of withdrawal of the seat belt 2 by the occupant H. As the overload is detected, the control unit 123 commands the motor driver 121 (outputs a stopping signal) to stop the actuation (i.e. the rotation) of the motor 114. In this embodiment, the overload detecting section 401 compares a current value (a motor current value) detected by the current sensor 122 with a predetermined current value (a current threshold for detecting overload) and determines that the overload is detected when the motor current value is equal to or more than the current threshold for detecting overload (for example 5A).

The winding process timing section 402 is provided for clocking the operating time period (execution time period) of the seat belt winding process by the seat belt retractor 1. In this embodiment, the winding process timing section 402 is composed of a software timer. Specifically, the winding process timing section 402 starts the clocking at the point of receiving the cancellation signal from the seat belt wearing sensor 61, that is, at the point of starting the seat belt winding-up process and continues the clocking until the seat belt winding-up process is terminated (the clocking is continued even when the motor 114 is stopped). Applications of the result of the clocking by the winding process timing section 402 (winding process time period) will be described.

The motor actuation timing section 403 is provided for clocking the actuation (rotation) time period of the motor 114. In this embodiment, the motor actuation timing section 403 is composed of a software timer. Specifically, the motor actuation timing section 403 starts the clocking at the point when the control unit 123 outputs an actuation signal (PWM signal, a control signal indicating the rotational direction of the motor 114) to the motor driver 121 and terminates the clocking at the point when the control unit 123 outputs a stopping signal to the motor driver 121. The result of the clocking of the motor actuation timing section 403 (motor actuating time period) is used in the retry determining section 405.

The motor actuation counting section 404 is a counter for counting the number of times of starting the actuation of the motor 114 (motor actuation number).

After an overload is detected by the overload detecting section 401 and the actuation of the motor 114 is stopped, the retry determining section 405 determines whether or not it is required to actuate the motor 114 again, in other words, whether or not it is required to wind up the seat belt 2 again (retry judgment). In this embodiment, the retry determining section 405 determines that further winding action is not required when the motor actuating time period is shorter than a predetermined time period (for example, 0.5 second) a predetermined number of times in a row (for example, twice in a row). This determination is based on the following reasons.

In general, as the motor is actuated in the state where the winding-up is impossible such as when the winding-up of the seat belt is completed or when it is impossible to release the catching of the seat belt, an overload is applied to the motor immediately after (i.e. shortly after) the actuation. Therefore, when the motor actuating time period is short a plurality of times in a row, it is extremely highly probable that the seat belt is in the state where winding-up is impossible.

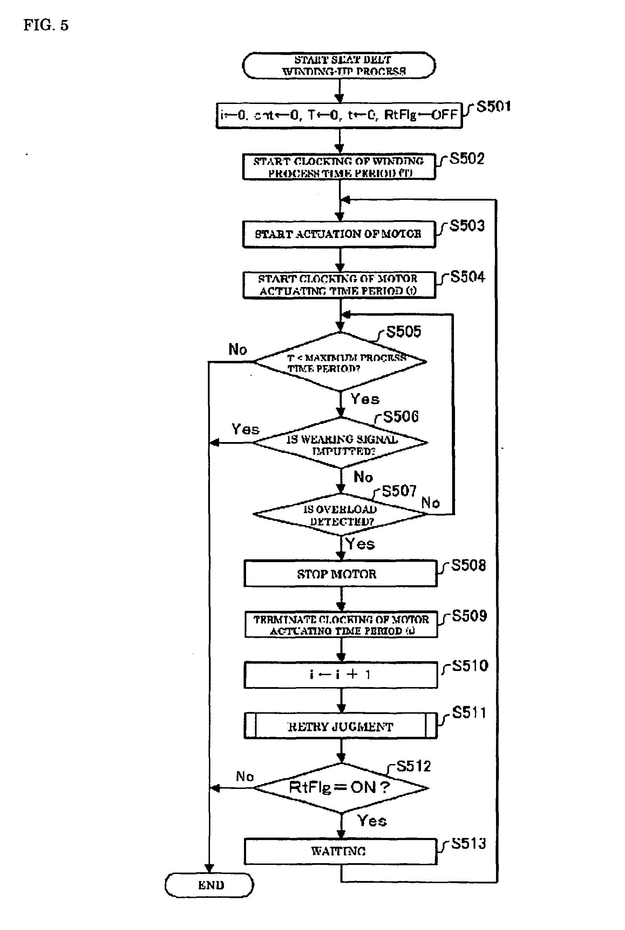

Fig. 5 is a flow chart showing procedures of the seat belt winding-up process according to this embodiment. For example, as the tongue plate 5 is released from the buckle 6 by the occupant H, the seat belt wearing sensor 61 detects this and thus outputs the cancellation signal to the seat belt retractor 1. The cancellation signal is inputted into the controller 12 of the seat belt retractor 1 so as to start the seat belt winding-up process.

First, the control unit 123 of the controller 12 sets various parameters (i, cnt, T, t, RtF1g) to be in their initial states (Step S501). Here, "i" is a parameter in which the result of the counting (motor actuation number) by the motor actuation counting section 404 is stored, and "cnt" is a parameter in which the number of times when the actuating time period of the motor 114 is short in a row is stored.

"T" is a parameter in which the result of the clocking (winding process time period) by the winding process timing section 402 is stored, and "t" is a parameter in which the result of the clocking (motor actuating time period) by the motor actuation timing section 403 is stored.

"RtF1g" is a flag in which the result of the retry judgment by the retry determining section 405 is stored. If the RtF1g is ON, the flag indicates that it is required to retry (that is, to actuate the motor 114 to wind up the seat belt 2 again). If the RtF1g is OFF, the flag indicates that it is not required to retry (that is, it is required to terminate the seat belt winding-up process).

Then, the winding process timing section 402 starts the clocking of the winding-up process (Step S502). In synchronism with this, the control unit 123 outputs the actuation signal to the motor driver 121. Accordingly, the motor 114 is started to rotate so that the seat belt 2 is wound up onto the spool 112 (Step S503).

In synchronism with outputting of the actuation signal by the control unit 123, the motor actuation timing section 403 starts to clock the motor actuating time period (Step S504).

Then, it is determined whether or not the winding process time period (T) is shorter than the maximum process time period (Step S505). The maximum process time period is a time period far exceeding the normal operation time period for the seat belt winding-up process by the normal seat belt retractor 1 and it is believed that the winding process time period in the normal operation never reaches the maximum process time period. Therefore, when the winding-up process time period (T) reaches the maximum process time period (No in step S505), it can be determined that it is impossible to continue the winding-up due to some defect such as failure so that the process is terminated. The maximum process time period is derived from tests, measurements, and theory and is previously stored in the control parameter table in memory such as a ROM. In this embodiment, the maximum process time period is set to 10 seconds.

When the winding-up process time period (T) does not reach to the maximum process time period (Yes in step S505), the control unit 123 checks whether or not the wearing signal from the seat belt wearing sensor 61 is inputted into the controller 12 (Step S506). When the wearing signal is inputted (Yes in step S506), this means that the occupant H wears the seat belt 2 again so that the process is terminated.

When the wearing signal is not inputted (No in step S506), the condition of detection of an overload is checked (Step S507). When the overload is detected (Yes in step S507), the control unit 123 stops the actuation of the motor 114 via the motor driver 121 (Step S508). Therefore, the winding-up of the seat belt 2 is stopped. On the other hand, when the overload is not detected (No in step S507), the processes from step S505 are repeated.

As the actuation of the motor 114 is stopped because of the detection of the overload, the motor actuation timing section 403 terminates the clocking of the motor actuating time period (step S509) and the motor actuation counting section 404 counts up the motor actuation number (i) (Step S510).

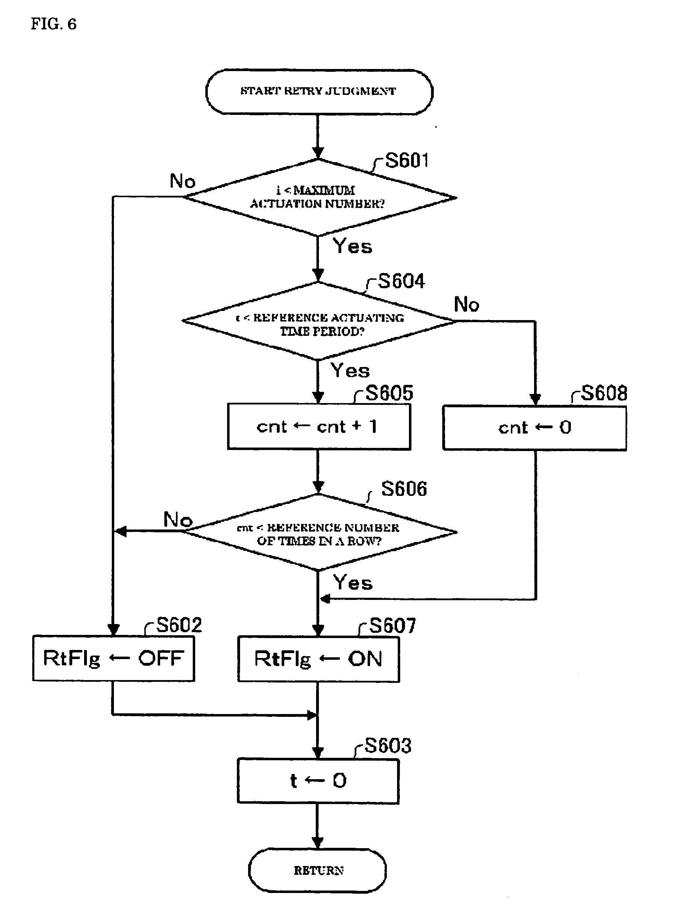

Then, the retry judgment is carried out by the retry determining section 405 (Step S511). Fig. 6 is a flow chart showing procedures of the retry judgment according to this embodiment.

First, the retry determining section 405 determines whether or not the motor actuation number (i) is lower than the maximum actuation number (Step S601). The maximum actuation number is an upper limit of the motor actuation number and is set to five in this embodiment. The maximum actuation number is also stored in the control parameter table similarly to the maximum process time as mentioned above. When the motor actuation number (i) reaches the maximum actuation number (No in step S601), the retry determining section 405 determines that it is impossible to wind up the seat belt 2 due to the completion of winding-up of the seat belt 2 or some other reason so that the retry is not required. As a result of this, the retry determining section 405 sets the RtF1g to be OFF (Step S602). The motor actuating time period (t) is reset (Step S603) and this process (the retry judgment) is terminated.

On the other hand, when the motor actuation number (i) is lower than the maximum actuation number (Yes in step S601), it is determined whether or not the motor actuating time period (t) is short (Step S604). The determination is conducted by comparing the motor actuating time period (t) with a reference actuating time period (for example, 0.5 second) stored in the control parameter table. As a result of this, when the motor actuating time period (t) does not reach the reference actuating time period, i.e. short (Yes in step S604), the number of times in a row (cnt) is counted up (Step S605).

Then, the counted number of times in a row (cnt) is compared with a reference number of times in a row (for example, two) stored in the control parameter table (Step S606). As a result of this, when the counted number of times in a row (cnt) is lower than the reference number of times in a row (Yes in step S606), the retry determining section 405 determines that the retry is required so as to set the RtFlg to be ON (Step S607). Then, the motor actuating time period (t) is reset (Step S603) and this process is terminated.

On the other hand, when the counted number of times in a row (cnt) reaches the reference number of times in a row (No in step S606), the retry determining section 405 determines that the winding-up of the seat belt 2 is completed, that it is impossible to release the catching of the seat belt, or that it is impossible to wind up the seat belt so that the retry is not required (Step S602). Then, the motor actuating time period (t) is reset (Step S603) and this process is terminated.

In step S604, when the motor actuating time period (t) is not short (No in step S604), the counted number of times in a row (cnt) is reset (step S608). In this case, the retry determining section 405 determines that the retry is required and this process is terminated (Step S607, Step S603).

Returning to the flow chart of Fig. 5, when it is determined that the retry is not required as a result of the aforementioned retry judgment (No in step S512), the control unit 123 terminates the process (the seat belt winding-up process). On the other hand, when it is determined that the retry is required (Yes in step S512), the control unit 123 waits the process until a preset waiting time (for example, two seconds) stored in the control parameter table elapses (Step S513) and, after that, repeats the process from step S503.

According to the retry function of the seat belt retractor of the first embodiment, the winding-up action is not repeated when the actuating time period of the motor 114 is short (shorter than the reference actuating time period) the reference number of times in a row (for example, twice). Therefore, this can avoid such a disadvantage that the winding-up action is repeated even when the winding-up of the seat belt 2 is completed, when it is impossible to release the catching of the seat belt, or when it is impossible to wind up the seat belt, that is, the action of winding up the seat belt 2 is not required.

### Second embodiment

Hereinafter, a seat belt retractor according to a second embodiment of the present invention will be described. The seat belt retractor according to this embodiment is different from the seat belt retractor according to the first embodiment by the content of the retry judgment in the seat belt winding-up process. The other portions are the same. The description on the same portions as those of the first embodiment will be omitted.

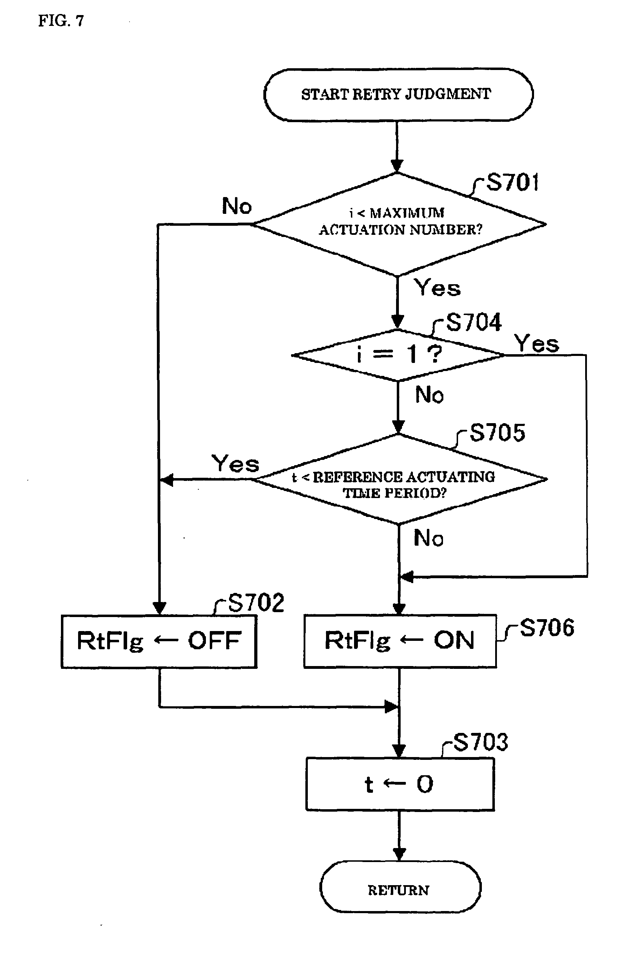

Fig. 7 is a flow chart showing procedures of the retry judgment according to this embodiment. First, the retry determining section 405 determines whether or not the motor actuation number (i) is lower than the maximum actuation number (Step S701). The meaning of the maximum actuation number is the same meaning as described above in the first embodiment. When the motor actuation number (i) reaches the maximum actuation number (No in step S701), similarly to the process (Fig. 6) of the first embodiment, the retry determining section 405 determines that the retry is not required and terminates the process (the retry judgment) (Step S702, Step S703).

On the other hand, when the motor actuation number (i) is lower than the maximum actuation number (Yes in step S701), the retry determining section 405 checks whether or not this actuation of the motor 114 is the first time (Step S704). As a result, when it is the first time (Yes in step S704), it is determined that the retry is required and this process is terminated (Step S706, Step 703). On the other hand, when it is not the first time (that is, the second time or more) (No in step S704), it is determined whether or not the motor actuating time period (t) is short (Step S705). As a result, when the motor actuating time period (t) is short (Yes in step S705), it is determined that the winding-up of the seat belt 2 is completed, that it is impossible to release the catching of the seat belt, or that it is impossible to wind up the seat belt so that the retry is not required (Step S702). Then, the motor actuating time period (t) is reset (Step S703) and this process is terminated.

In the step S705, when the motor actuating time period (t) is not short (No in step S705), it is determined that the retry is required and this process is terminated (Step S706, Step S703).

According to the retry function of the seat belt retractor of the second embodiment as mentioned above, the winding-up action is not repeated when the actuating time period of the motor 114 restarting is short. In this manner, the state where it is impossible to wind up the seat belt, for example when the winding-up of the seat belt 2 is completed or when it is impossible to release the catching of the seat belt, can be precisely detected. Therefore, unnecessary actuation of the motor 114, i.e. unnecessary winding-up action can be avoided as much as possible.

It should be understood that the present invention is not limited to any of the aforementioned embodiments and various changes could be made without departing from the scope of the invention.

The method of detecting an overload of the motor 114 by the overload detecting section 401 is not limited to the method based on current value (motor current value) detected by the current sensor 122 and may be any of various well-known detecting methods. For example, the controller 12 and a sensor for measuring the tension of the seat belt 2 are connected by a wire and the overload detecting section 401 may detect an overload of the motor 114 based on the magnitude of the tension applied on the seat belt 2.

Though the aforementioned first embodiment has been described with reference to an example where the seat belt apparatus is mounted to the motor vehicle seat, the present invention may be applied to an airplane in which a seat belt apparatus is mounted to a seat, not limited to the motor vehicle.

The order of the respective processes in the flow charts described in the aforementioned embodiments is not limited to the order as described, the order may be changed without departing from the scope of the invention.

The function of the control unit 123 can be achieved by hardware for exclusive use, not limited to the software.

## Claims

1. A seat belt retractor comprising:
a seat belt winding means for winding up a seat belt (2) by means of actuation of a motor (114); and
a control means (123) which repeats, under a predetermined condition, a process of stopping the actuation of said motor (114) when an overload of said motor (114) is detected, and restarting the actuation of said motor (114) after a lapse of a predetermined time period, wherein said control means (123) comprises a motor actuation counting means (404) for counting up the number of times of starting the actuation of the motor (114),
**characterized in that**
said control means (123) further comprises:
a motor actuation timing means (403) for clocking the time period from the start to the stop of the actuation of said motor (114); and
a retry determining means (405) which determines, based on the result of the clocking by said motor actuation timing means (403) and the result of the counting by said motor actuation counting means (404), whether or not it is required to restart the actuation of said motor (114) which was stopped by the detection of said overload, wherein said retry determining means (405) determines that it is not required to restart the actuation of said motor (114) when a time period as the result of the clocking by said motor actuation timing means (403) is shorter than a predetermined time period a plurality of times in a row.

2. A seat belt retractor comprising:
a seat belt winding means for winding up a seat belt (2) by means of actuation of a motor (114); and
a control means (123) which repeats, under a predetermined condition, a process of stopping the actuation of said motor (114) when an overload of said motor (114) is detected, and restarting the actuation of said motor (114) after a lapse of a predetermined time period, wherein said control means (123) comprises a motor actuation counting means (404) for counting up the number of times of starting the actuation of the motor (114),
**characterized in that**
said control means (123) further comprises:
a motor actuation timing means (403) for clocking the time period from the start to the stop of the actuation of said motor (114); and
a retry determining means (405) which determines, based on the result of the clocking by said motor actuation timing means (403) and the result of the counting by said motor actuation counting means (404), whether or not it is required to restart the actuation of said motor (114) which was stopped by the detection of said overload, wherein said retry determining means (405) determines that it is not required to restart the actuation of said motor (114) when the actuation of said motor (114) which was restarted is stopped by the detection of said overload and a time period as the result of the clocking by said motor actuation timing means (403) is shorter than a predetermined time period.

3. A seat belt apparatus comprising:
a seat belt (2);
a tongue plate (5) which is slidably attached to said seat belt (2);
a buckle (6) to which said tongue plate (5) is inserted and latched; and
a seat belt retractor (1) as claimed in claim 1 or claim 2.

4. A seat belt winding method for repeating, under a predetermined condition, a process of stopping the actuation of a motor (114), which provides power for winding up a seat belt (2), when an overload of said motor (114) is detected during the actuation of said motor (114), and restarting the actuation of said motor (114) after a lapse of a predetermined time period, comprising:
a motor actuation counting step (S510) for counting up the number of times of starting the actuation of the motor (114),
**characterized by**
a motor actuation timing step (S504, S509) for clocking the time period from the start to the stop of the actuation of said motor (114); and
a retry determining step (S511) for determining, based on the result obtained in said motor actuation timing step (S504, S509) and the result obtained in said motor actuation counting step (S510), whether or not it is required to restart the actuation of said motor (114) which was stopped by the detection of said overload, wherein it is determined that it is not required to restart the actuation of said motor (114) when a time period (t) as the result obtained in said motor actuation timing step (S504, S509) is shorter than a predetermined time period a plurality of times cut in a row.

5. A seat belt winding method for repeating, under a predetermined condition, a process of stopping the actuation of a motor (114), which provides power for winding up a seat belt (2), when an overload of said motor (114) is detected during the actuation of said motor (114), and restarting the actuation of said motor (114) after a lapse of a predetermined time period, comprising:
a motor actuation counting step (S310) for counting up the number of times of starting the actuation of the motor (114),
**characterized by**
a motor actuation timing step (S504, S509) for clocking the time period from the start to the stop of the actuation of said motor (114); and
a retry determining step (S511) for determining, based on the result obtained in said motor actuation timing step (S504, S509) and the result obtained in said motor actuation counting step (S510), whether or not it is required to restart the actuation of said motor (114) which was stopped by the detection of said overload, wherein it is determined that it is not required to restart the actuation of said motor (114) when the actuation of said motor (114) which was restarted is stopped by the detection of said overload and a time period (t) as the result obtained in said motor actuation timing step (S504, S509) is shorter than a predetermined time period.

## Patentansprüche

1. Sitzgurt-Aufrollvorrichtung, umfassend:
ein Sitzgurt-Aufwickel-Mittel, um einen Sitzgurt (2) mittels einer Betätigung eines Motors (114) aufzuwickeln; und
ein Steuermittel (123), welches unter einer vorbestimmten Bedingung einen Prozess eines Anhaltens der Bestätigung des Motors (114), wenn eine Überlast des Motors (114) erfasst wird, und eines Wiederaufnehmens der Betätigung des Motors (114) nach einer vorbestimmten Zeitperiode wiederholt, wobei das Steuermittel (123) ein Motorbetätigungs-Zählmittel (404) umfasst, um eine Anzahl von Starts der Betätigung des Motors (114) zu zählen,
**dadurch gekennzeichnet,**
**dass** das Steuermittel (123) darüber hinaus umfasst:
ein Motorbetätigungs-Zeitmessmittel (403), um die Zeitperiode von dem Start bis zu dem Anhalten der Betätigung des Motors (114) zu messen; und
ein Wiederholungsbestimmungsmittel (405), welches abhängig von dem Ergebnis der Messung durch das Motorbetätigungs-Zeitmessmittel (403) und abhängig von dem Ergebnis des Zählens durch das Motorbetätigungs-Zählmittel (404) bestimmt,
ob es erforderlich ist, die Betätigung des Motors (114), welcher bei der Erfassung der Überlast angehalten wurde, wieder aufzunehmen oder nicht, wobei das Wiederholungsbestimmungsmittel (405) bestimmt, dass es nicht erforderlich ist, die Betätigung des Motors (114) wieder aufzunehmen, wenn eine Zeitspanne als das Ergebnis des Messens durch das Motorbetätigungs-Zeitmessmittel (403) mehrfach hintereinander kürzer als eine vorbestimmte Zeitspanne ist.

2. Sitzgurt-Aufrollvorrichtung, umfassend:
ein Sitzgurt-Aufwickel-Mittel, um einen Sitzgurt (2) mittels einer Betätigung eines Motors (114) aufzuwickeln; und
ein Steuermittel (123), welches unter einer vorbestimmten Bedingung einen Prozess eines Anhaltens der Betätigung des Motors (114), wenn eine Überlast des Motors (114) erfasst wird, und eines Wiederaufnehmens der Betätigung des Motors (114) nach einer vorbestimmten Zeitspanne wiederholt, wobei das Steuermittel (123) ein Motorbetätigungs-Zählmittel (404) umfasst, um eine Anzahl von Starts der Betätigung des Motors (114) zu zählen,
**dadurch gekennzeichnet,**
**dass** das Steuermittel (123) darüber hinaus umfasst:
ein Motorbetätigungs-Zeitmessmittel (403), um die Zeitspanne von dem Start bis zu dem Anhalten der Betätigung des Motors (114) zu messen; und
ein Wiederholungsbestimmungsmittel (405), welches abhängig von dem Ergebnis des Messens durch das Motorbetätigungs-Zeitmessmittel (403) und das Ergebnis des Zählens durch das Motorbetätigungs-Zählmittel (404) bestimmt, ob es erforderlich ist, die Betätigung des Motors (114), welcher durch das Erfassen der Überlast gestoppt wurde, wieder aufzunehmen oder nicht, wobei das Wiederholungsbestimmungsmittel (405) bestimmt, dass es nicht erforderlich ist, die Betätigung des Motors (114) wieder aufzunehmen, wenn die Betätigung des Motors (114), welche wieder aufgenommen wurde, durch das Erfassen der Überlast angehalten wird, und eine Zeitspanne als das Ergebnis des Messens durch das Motorbetätigungs-Zeitmessmittel (403) kürzer als eine vorbestimmte Zeitspanne ist.

3. Sitzgurt-Vorrichtung umfassend:
einen Sitzgurt (2);
eine Zungenplatte (5), welche gleitend an dem Sitzgurt (2) angebracht ist;
ein Gurtschloss (6), in welches die Zungenplatte (5) eingeführt und mit welcher diese verriegelt wird; und
eine Sitzgurt-Aufrollvorrichtung (1) nach Anspruch 1 oder Anspruch 2.

4. Sitzgurt-Aufwickelverfahren, um unter einer vorbestimmten Bedingung einen Prozess eines Anhaltens der Betätigung eines Motors (114), welcher eine Leistung zum Aufwickeln eines Sitzgurtes (2) bereitstellt, wenn eine Überlast des Motors (114) während der Betätigung des Motors (114) erfasst wird, und eines Wiederaufnehmens der Betätigung des Motors (114) nach einer vorbestimmten Zeitspanne zu wiederholen, umfassend:
einen Motorbetätigungs-Zählschritt (S510), um die Anzahl von Starts der Betätigung des Motors (114) zu zählen,
**gekennzeichnet durch**
einen Motorbetätigungs-Zeitmessschritt (S504, S509), um die Zeitspanne von dem Start bis zu dem Anhalten der Betätigung des Motors (114) zu messen; und
einen Wiederholungsbestimmungsschritt (S511), um abhängig von dem Ergebnis, welches bei dem Motorbetätigungs-Zeitmessschritt (S504, S509) erzielt wird, und abhängig von dem Ergebnis, welches bei dem Motorbetätigungs-Zählschritt (S510) erzielt wird, zu bestimmen, ob es erforderlich ist, die Betätigung des Motors (114), welcher **durch** das Erfassen der Überlast gestoppt wurde, wieder aufzunehmen oder nicht, wobei bestimmt wird, dass es nicht erforderlich ist, die Betätigung des Motors (114) wieder aufzunehmen, wenn eine Zeitspanne (t) als das Ergebnis, welches bei dem Motorbetätigungs-Zeitmessschritt (S504, S509) erzielt wird, mehrfach hintereinander kürzer als eine vorbestimmte Zeitspanne ist.

5. Sitzgurt-Aufwickelverfahren, um unter einer vorbestimmten Bedingung einen Prozess eines Anhaltens der Betätigung eines Motors (114), welcher eine Leistung zum Aufwickeln eines Sitzgurtes (2) bereitstellt, wenn eine Überlast des Motors (114) während der Betätigung des Motors (114) erfasst wird, und eines Wiederaufnehmens der Betätigung des Motors (114) nach einer vorbestimmten Zeitspanne zu wiederholen, umfassend:
einen Motorbetätigungs-Zählschritt (S510), um die Anzahl von Starts der Betätigung des Motors (114) zu zählen,
**gekennzeichnet durch**
einen Motorbetätigungs-Zeitmessschritt (S504, S509), um die Zeitspanne von dem Start bis zu dem Anhalten der Betätigung des Motors (114) zu messen; und
einen Wiederholungsbestimmungsschritt (S511), um abhängig von dem Ergebnis, welches bei dem Motorbetätigungs-Zeitmessschritt (S504, S509) erzielt wird, und abhängig von dem Ergebnis, welches bei dem Motorbetätigungs-Zählschritt (S510) erzielt wird, zu bestimmen, ob es erforderlich ist, die Betätigung des Motors (114), welcher **durch** das Erfassen der Überlast gestoppt wurde, wieder aufzunehmen oder nicht, wobei bestimmt wird, dass es nicht erforderlich ist, die Betätigung des Motors (114) wieder aufzunehmen, wenn die Betätigung des Motors (114), welche wieder aufgenommen wurde, **durch** das Erfassen der Überlast gestoppt wird, und eine Zeitspanne (t) als das Ergebnis, welches bei dem Motorbetätigungs-Zeitmessschritt (S504, S509) erzielt wird, kürzer als eine vorbestimmte Zeitspanne ist.

## Revendications

1. Rétracteur de ceinture de sécurité, comprenant :
des moyens d'enroulement de ceinture de sécurité, pour enrouler une ceinture de sécurité (2) au moyen de l'actionnement d'un moteur (114) ; et
des moyens de commande (123) répétant, dans des conditions prédéterminées, un processus d'arrêt de l'actionnement dudit moteur (114) lorsqu'une surcharge dudit moteur (114) est détectée, et de reprise de l'actionnement dudit moteur (114) après expiration d'une période de temps prédéterminée, dans lequel lesdits moyens de commande (123) comprennent des moyens de comptage des actionnements du moteur (404), pour effectuer un comptage additif du nombre de lancements de l'actionnement du moteur (114),
**caractérisé en ce que**
lesdits moyens de commande (123) comprennent en outre :
des moyens de positionnement temporel des actionnements du moteur (403), pour cadencer la période de temps allant du lancement à l'arrêt de l'actionnement dudit moteur (114) ; et
des moyens de détermination de retentatives (405) déterminant, d'après le résultat du cadencement par lesdits moyens de positionnement temporel des actionnements du moteur (403) et le résultat du comptage par lesdits moyens de comptage des actionnements du moteur (404), si ou non il faut relancer l'actionnement dudit moteur (114) qui avait été stoppé par la détection de ladite surcharge, dans lequel lesdits moyens de détermination de retentatives (405) déterminent qu'il n'est pas nécessaire de relancer l'actionnement dudit moteur (114) lorsqu'une période de temps, en résultat du cadencement par lesdits moyens de positionnement temporel des actionnements du moteur (403), est plus courte qu'une période de temps prédéterminée, une pluralité de fois à la suite.

2. Rétracteur de ceinture de sécurité selon la revendication 1, comprenant :
des moyens d'enroulement de ceinture de sécurité, pour enrouler une ceinture de sécurité (2) au moyen de l'actionnement d'un moteur (114) ; et
des moyens de commande (123) répétant, dans des conditions prédéterminées, un processus d'arrêt de l'actionnement dudit moteur (114) lorsqu'une surcharge dudit moteur (114) est détectée, et de reprise de l'actionnement dudit moteur (114) après expiration d'une période de temps prédéterminée, dans lequel lesdits moyens de commande (123) comprennent des moyens de comptage des actionnements du moteur (404), pour effectuer un comptage additif du nombre de lancements de l'actionnement du moteur (114),
**caractérisé en ce que**
lesdits moyens de commande (123) comprennent en outre :
des moyens de positionnement temporel des actionnements du moteur (403), pour cadencer la période de temps allant du lancement à l'arrêt de l'actionnement dudit moteur (114) ; et
des moyens de détermination de retentatives (405) déterminant, d'après le résultat du cadencement par lesdits moyens de positionnement temporel des actionnements du moteur (403) et le résultat du comptage par lesdits moyens de comptage des actionnements du moteur (404), si ou non il faut relancer l'actionnement dudit moteur (114) qui avait été stoppé par la détection de ladite surcharge, dans lequel lesdits moyens de détermination de retentatives (405) déterminent qu'il n'est pas nécessaire de relancer l'actionnement dudit moteur (114) lorsque l'actionnement dudit moteur (114) qui avait été relancé est stoppé par la détection de ladite surcharge et qu'une période de temps, en résultat du cadencement par lesdits moyens de positionnement temporel des actionnements du moteur (403), est plus courte qu'une période de temps prédéterminée.

3. Appareil de ceinture de sécurité, comprenant :
une ceinture de sécurité (2) ;
une plaque formant languette (5), attachée à coulissement à ladite ceinture de sécurité (2) ;
une boucle (6), à laquelle ladite plaque formant languette (5) est insérée et verrouillée ; et
un rétracteur de ceinture de sécurité (1), tel que revendiqué selon la revendication 1 ou la revendication 2.

4. Procédé d'enroulement de ceinture de sécurité, pour répéter, dans des conditions prédéterminées, un processus d'arrêt de l'actionnement d'un moteur (114), qui fournit de l'énergie pour enrouler une ceinture de sécurité (2), lorsqu'une surcharge dudit moteur (114) est détectée durant l'actionnement dudit moteur (114) ; et de relance de l'actionnement dudit moteur (114) après expiration d'une période de temps prédéterminée, comprenant :
une étape de comptage des actionnements du moteur (S510), pour effectuer un comptage additif du nombre de lancements de l'actionnement du moteur (114),
**caractérisé par**
une étape de positionnement temporel des actionnements du moteur (S504 ; S509), pour cadencer la période de temps allant du lancement à l'arrêt de l'actionnement dudit moteur (114) ; et
une étape de détermination de retentatives (S511) déterminant, d'après le résultat obtenu à ladite étape de positionnement temporel des actionnements du moteur (S504 ; S509) et le résultat obtenu à ladite étape de comptage des actionnements du moteur (S510), si ou non il faut relancer l'actionnement dudit moteur (114) qui avait été stoppé par la détection de ladite surcharge, dans lequel il est déterminé qu'il n'est pas nécessaire de relancer l'actionnement dudit moteur (114) lorsqu'une période de temps (t), en résultat obtenu à ladite étape de positionnement temporel des actionnements du moteur (S504 ; S509), est plus courte qu'une période de temps prédéterminée, une pluralité de fois à la suite.

5. Procédé d'enroulement de ceinture de sécurité, pour répéter, dans des conditions prédéterminées, un processus d'arrêt de l'actionnement d'un moteur (114), qui fournit de l'énergie pour enrouler une ceinture de sécurité (2), lorsqu'une surcharge dudit moteur (114) est détectée durant l'actionnement dudit moteur (114) ; et de relance de l'actionnement dudit moteur (114) après expiration d'une période de temps prédéterminée, comprenant :
une étape de comptage des actionnements du moteur (S510), pour effectuer un comptage additif du nombre de lancements de l'actionnement du moteur (114),
**caractérisé par**
une étape de positionnement temporel des actionnements du moteur (S504 ; S509), pour cadencer la période de temps allant du lancement à l'arrêt de l'actionnement dudit moteur (114) ; et
une étape de détermination de retentatives (S511) déterminant, d'après le résultat obtenu à ladite étape de positionnement temporel des actionnements du moteur (S504 ; S509) et le résultat obtenu à ladite étape de comptage des actionnements du moteur (S510), si ou non il faut relancer l'actionnement dudit moteur (114) qui avait été stoppé par la détection de ladite surcharge, dans lequel il est déterminé qu'il n'est pas nécessaire de relancer l'actionnement dudit moteur (114) lorsque l'actionnement dudit moteur (114) qui avait été relancé est stoppé par la détection de ladite surcharge et qu'une période de temps (t), en résultat obtenu à ladite étape de positionnement temporel des actionnements du moteur (S504 ; S509), est plus courte qu'une période de temps prédéterminée.
